Europäisches Patentamt

European Patent Office

Office européen des brevets

(11) Veröffentlichungsnummer: **0 254 675 B1**

# EUROPÄISCHE PATENTSCHRIFT

(45) Veröffentlichungstag der Patentschrift: 07.08.91

(51) Int. Cl.5: **G02B 27/34**, G02B 23/10

(21) Anmeldenummer: 87810356.3

(22) Anmeldetag: 23.06.87

(54) Optisches Zielgerät.

(30) Priorität: 23.07.86 CH 2926/86

(43) Veröffentlichungstag der Anmeldung:
27.01.88 Patentblatt 88/04

(45) Bekanntmachung des Hinweises auf die
Patenterteilung:
07.08.91 Patentblatt 91/32

(84) Benannte Vertragsstaaten:
DE IT SE

(56) Entgegenhaltungen:
EP-A- 0 069 575
EP-A- 0 179 036
US-A- 2 476 340
US-A- 2 780 130

(73) Patentinhaber: **Leica Aarau AG**
**Schachenallee 25**
**CH-5000 Aarau(CH)**

Patentinhaber: **mb- microtec ag**

**CH-3172 NIEDERWANGEN(CH)**

(72) Erfinder: **Etter, Hans**
**Bergli 15**
**CH-3182 Ueberstorf(CH)**
Erfinder: **Hauri, Bernhard**
**Birkenweg 312**
**CH-5053 Staffelbach(CH)**

## Beschreibung

Die Erfindung bezieht sich auf ein optisches Zielgerät mit ersten Mitteln zum Anvisieren eines Zielgebietes, welche einen teildurchlässigen Spiegel umfassen, zweiten Mitteln zur Definition einer Zielmarke mit mindestens einer ersten Lichtquelle für die Beleuchtung der Zielmarke, spiegelnden Mitteln zur Umlenkung des Lichtes der ersten Lichtquelle auf die Zielmarke sowie Mitteln zur Überlagerung des von der Zielmarke abgegebenen Lichtes mit dem Zielstrahlengang über den teildurchlässigen Spiegel derart, dass für einen das Zielgebiet anvisierenden Beobachter das Bild der Zielmarke angenähert im Unendlichen erscheint.

Derartige Zielgeräte sind als Reflexvisiere von Kanonen und anderen Schusswaffen bekannt. So offenbart DE-OS-2 122 251 (W.R. Weaver Co.) eine Visiereinrichtung mit einem Gehäuse zum Anvisieren und einem seitlich daran angebrachten Lichtsammelstab als Zielmarke. Über zwei am Gehäuse angebrachte Spiegel wird das Bild der Stirnwand des Lichtsammelstabes dem Sichtfeld überlagert. Eine Anpassung an unterschiedliche Lichtverhältnisse oder Zielhelligkeiten ist dabei nicht vorgesehen.

Weiterhin ist aus FR-PS-1 126 409 (Kodak-Pathé) ein Reflexvisier bekannt, bei dem eine von einem fluoreszierenden Lichtsammelstab beleuchtete Zielmarke über einen halbtransparenten Hohlspiegel dem Zielstrahlengang überlagert wird. Dabei ist ein Filter, das das Licht des Lichtsammelstabes bevorzugt durchlässt, wahlweise in den Beobachtungsstrahlengang einschaltbar, um sehr helle Zielobjekte der Zielmarkenhelligkeit anzupassen. Auch das optische Zielgerät gemäss CH-PS-576 617 (J.A.I . Ekstrand) umfasst ein Reflexvisier, bei dem die Helligkeit einer Zielmarke durch eine elektrische Lampe oder durch auswechselbare Abschwächungsfilter für eine Betalicht-Beleuchtung einstellbar ist. Auch ist aus CH-PS-318 892 (Contraves AG) auch schon ein Reflexvisier bekannt, bei dem die Lichtstärke einer Zielmarkenbeleuchtung durch einen variablen Abstand zwischen einem Betastrahler und einer Leuchtfarbe verändert und durch Absorptionsfilter in einer Revolverscheibe die Zielhelligkeit variiert werden kann.

Aus US-PS-2 476 340 (C.W. Wallhausen) ist eine Beleuchtungssteuerung für ein optisches Instrument bekannt, bei der ein auf einer Strichplatte befindliches Fadenkreuz durch einen an der Strichplatte befestigten, nicht radioaktiven lumineszenten Phosphor beleuchtet wird. Eine Aktivierung des Phosphors erfolgt durch ein nicht-lumineszentes radioaktives Material, welches nahe dem Phosphor montiert ist und durch geeignete Mittel in eine den Phosphor mehr oder weniger überlappende Lage einstellbar ist. Dadurch wird die Menge der auf den Phosphor auftreffenden aktivierenden Strahlung so verändert, dass dessen Leuchtstärke zwischen Null und einem Maximum einstellbar ist.

Ferner offenbart EP-A2-0 069 575 (Ring Sights) schon ein Reflexvisier, bei dem ein im Unendlichen erscheinendes Bild einer Zielmarke über einen teilweise reflektierenden Hohlspiegel einem Zielfeld überlagert wird. Die Zielmarke ist aus reflektierenden und durchlässigen Teilen zusammengesetzt. Umgebungslicht beleuchtet die durchlässigen und eine Kunstlichtquelle die reflektierenden Teile, womit sich eine passende Beleuchtung für den Gebrauch bei Tag und Nacht ergibt.

Aufgabe der Erfindung ist, ein Zielgerät der eingangs genannten Art zu schaffen, bei dem mit handelsüblichen Kunstlichtquellen konstanter Lichtstärke in einfacher Weise eine Zielmarkenbeleuchtung variabler Helligkeit möglich ist.

Diese Aufgabe wird beim erfindungsgemässen Zielgerät dadurch gelöst, dass mindestens eines der drei Elemente - erste Lichtquelle, Zielmarke und spiegelnde Mittel - gegenüber den beiden anderen Elementen derart verschiebbar oder verdrehbar angeordnet ist, dass sich bei seiner Verschiebung oder Verdrehung die Beleuchtungsstärke der Zielmarke oder von Teilen der Zielmarke ändert. Eine vorteilhafte Ausführungsform ist dadurch gekennzeichnet, dass die mindestens eine erste Lichtquelle stromlos ist, dass zur Beleuchtung der Zielmarke mindestens eine weitere Lichtquelle angeordnet ist, welche ein durch Tageslicht anregbares Phosphormaterial enthält, dass ein Teil der Zielmarke durch die Lichtquelle beleuchtet ist, die das durch Tageslicht anregbare Phosphormaterial enthält und dass ein anderer Teil der Zielmarke durch die erste Lichtquelle beleuchtet ist.

Dabei ist das Zielgerät zweckmässig so aufgebaut, dass die Zielmarke eine im Zentrum befindliche Kreisfläche sowie mehrere um das Zentrum radial angeordnete Balken umfasst, dass die spiegelnden Mittel zur Umlenkung des Lichtes der ersten Lichtquelle auf die Zielmarke in Form einer Mantelfläche eines Kegelstumpfes ausgebildet sind, dessen kleinere Öffnung unmittelbar benachbart der Kreisfläche der Zielmarke zur Beleuchtung durch die weitere, durch Tageslicht anregbare Lichtquelle angeordnet ist, wobei die Mantelfläche aussen verspiegelt und auf einem Kreis um den Kegelstumpf herum zu jedem Balken der Zielmarke eine stromlose Lichtquelle im Kreis verschieblich angeordnet ist, derart, dass sich bei einer Verschiebung der stromlosen Lichtquellen die Beleuchtungsstärke der Balken über die spiegelnde Mantelfläche ändert. Eine Variante ist so ausgeführt, dass die das durch Tageslicht anregbare Phosphormaterial enthaltende Lichtquelle einen stabförmigen Körper aus Phosphormaterial umfasst, der derart ausgebildet ist, dass er Umgebungslicht sammelt und gerichtet über seine der Kreisfläche der Zielmarke benachbarte Stirnfläche durch die kleinere Öffnung der Mantelfläche des Kegelstumpfes hindurch abgibt. Eine zweckmässige Ausführungsform ist dadurch gekennzeichnet, dass die stromlosen Lichtquellen an ihren Leuchtflächen Mittel mit längs der Leuchtflächen veränderlicher Lichtabschwächung aufweisen derart, dass bei der Verschiebung der stromlosen Lichtquellen Leuchtflächenteile mit unterschiedlicher Lichtstärke zur Beleuchtung der Zielmarkenteile wirksam werden Mit Vorteil ist diese Variante so ausgeführt, dass die Mittel mit veränderlicher Lichtabschwächung Blenden mit einer rasterförmigen Anordnung von Blendenlöchern oder opaken Bereichen sind.

Die Erfindung wird nachfolgend anhand von in den Zeichnungen dargestellten Ausführungsbeispielen näher erläutert. Es zeigen

Fig. 1 einen Längsschnitt durch ein erfindungsgemässes Zielgerät,

Fig. 2 die Zielmarkenbeleuchtung des Gerätes gem. Fig. 1 im Einzelnen,

Fig. 3 einen Schnitt längs der Linie A - A in Fig. 2 bei Einstellung maximaler Beleuchtungsstärke,

Fig. 4 einen Schnitt längs der Linie A - A in Fig. 2 bei Einstellung minimaler Beleuchtungsstärke,

Fig. 5 einen Längsschnitt durch eine Variante der Zielmarkenbeleuchtung des Gerätes gem. Fig. 1 im Detail und

Fig. 6 einen Schnitt längs der Linie B - B in Fig. 5.

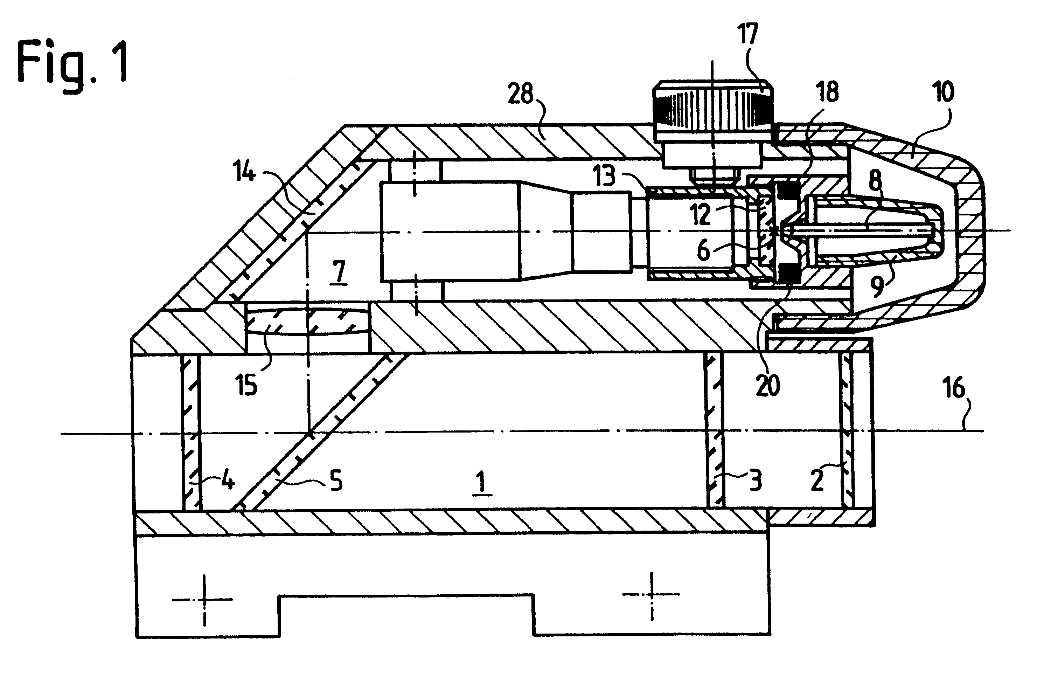

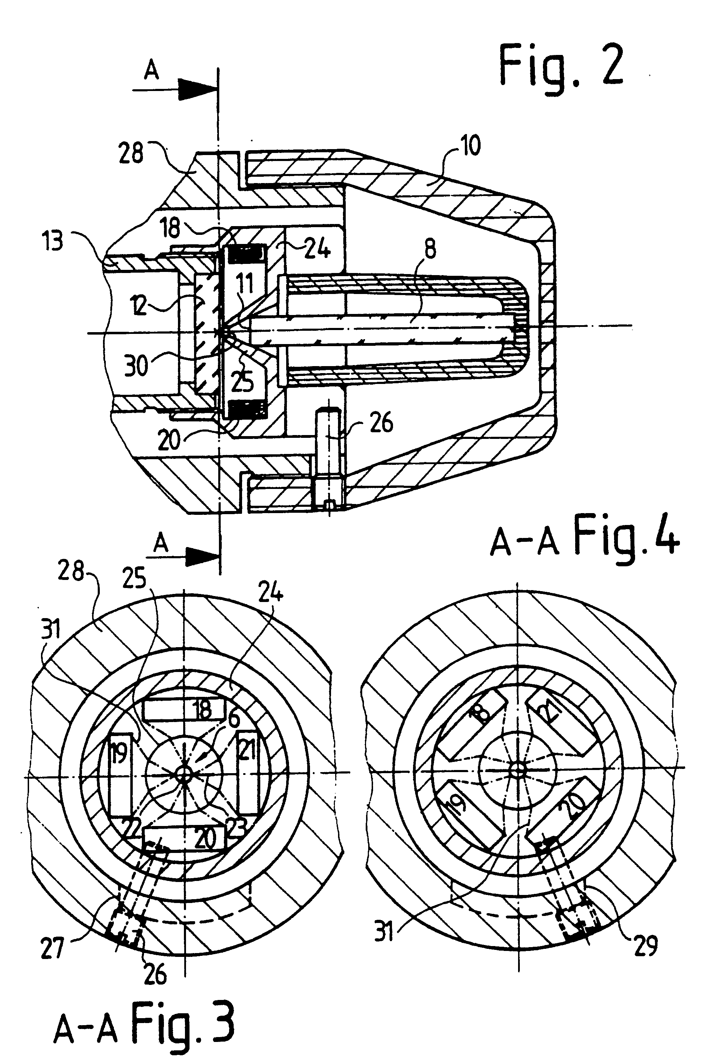

Gemäss Fig. 1 dient ein erster rohrförmiger Hohlraum 1 zum Anvisieren eines Zielgebietes, das sich rechts vom Gerät entfernt befindet. Der Hohlraum 1 ist vorn durch zwei Glasplatten 2, 3 und hinten durch eine Glasplatte 4 abgeschlossen. Zwischen den Glasplatten 3 und 4 ist ein teildurchlässiger Spiegel 5 zur Einspiegelung einer Zielmarke 6 in den Hohlraum 1 eingefügt. Die Zielmarke zeigen Fig. 3, 4 und 6 im Detail.

In einem neben dem Hohlraum 1 angeordneten zweiten Hohlraum 7 ist zur Beleuchtung der Zielmarke 6 mit Tageslicht ein stabförmiger Körper 8 aus Phosphormaterial vorgesehen, der Umgebungslicht durch zwei transparente Kappen 9, 10 hindurch aufnimmt und über seine der Zielmarke 6 benachbarte Stirnfläche 11 wieder abgibt, wie Fig. 2 im Einzelnen zeigt. Die Zielmarke 6 befindet sich auf einer Glasplatte 12, die in einer Fassung 13 gehaltert ist und über einen Umlenkspiegel 14 und eine Optik 15 so in den Zielstrahlengang 16 im Hohlraum 1 eingespiegelt wird, dass sie dem Beobachter im Unendlichen erscheint. Auf die Fassung 13 wirken horizontal und vertikal je eine Stellschraube zur Justierung der Zielmarke 6 ein, von denen nur die Vertikalschraube 17 dargestellt ist.

Neben dem Lichtsammelstab 8 sind zur Beleuchtung der Zielmarke 6 noch vier stromlose Tritium-Leuchtzellen 18, 19, 20, 21 kreisförmig um die Stirnfläche 11 des Sammelstabes 8 herum angeordnet, wie Fig. 3 und Fig. 4 im Einzelnen zeigen und von denen im Längsschnitt der Fig. 1 und Fig. 2 nur die Zellen 18, 20 erkennbar sind. Wie aus den Fig. 3, 4 ersichtlich, umfasst die Zielmarke 6 eine im Zentrum befindliche Kreisfläche 22 sowie vier um das Zentrum radial angeordnete Balken 23. Die Leuchtzellen 18, 19, 20, 21 sind in einer Fassung 24 montiert, welche einen zentral angeordneten kegelförmigen Bereich 25 (Fig. 2) umfasst und gegenüber der Glasplatte 12 mit der Zielmarke 6 drehbar ist. Zur Verdrehung der Leuchtzellen 18, 19, 20, 21 ist deren Fassung 24 über einen Mitnehmerstift 26 mit der transparenten Kappe 10 verbunden, welche als Drehgriff dient und ihrerseits auf dem Gehäuse 28 des zweiten Hohlraumes 7 drehbar gelagert ist. Der Bereich der Drehung ist durch Anschläge 27, 29 im Gehäuse 28 begrenzt, die in Fig. 3 und Fig. 4 durch eine gebrochene Linie dargestellt sind.

Der kegelförmige Bereich 25 besitzt in unmittelbarer Nachbarschaft der zentralen Kreisfläche 22 der Zielmarke 6 eine Öffnung 30 Der Lichtsammelstab 8 ragt mit seiner Stirnfläche 11 in den hohlen Teil des Bereiches 25 hinein und beleuchtet durch die Öffnung 30 der stumpfförmig abgeschnittenen Kegelspitze die zentrale Kreisfläche 22. Die den Leuchtzellen 18, 19, 20, 21 gegenüberliegende äussere Mantelfläche des kegelförmigen Bereiches 25 ist verspiegelt und dient dazu, deren Leuchtkegel auf die entsprechenden Balken 23 der Zielmarke 6 umzulenken, wie dies durch die gebrochenen Linien 31 in Fig. 3 und Fig. 4 angedeutet ist.

Verdreht man nun, wie oben beschrieben, die transparente Kappe 10, so verschieben sich die Leuchtzellen 18, 19, 20, 21 mit ihren Leuchtkegeln 31 gegenüber den Zielmarkenbalken 23 derart, dass sich die Beleuchtung der Balken 23 von einer Maximalstellung gem. Fig. 3 bis zu einer Minimalstellung gem. Fig. 4 ändert.

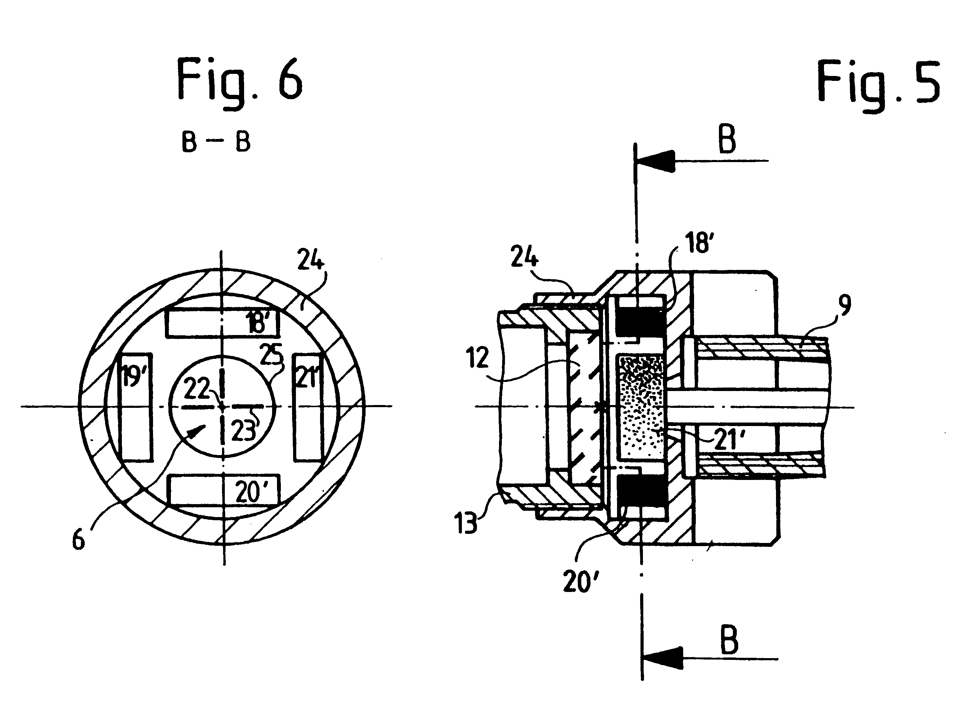

Die Änderung der Beleuchtungsstärke der Zielmarke 6 durch die Leuchtzellen 18, 19, 20, 21 lässt sich noch besser steuern, wenn man die Lichtaustrittsflächen der Leuchtzellen mit einer längs ihrer Ausdehnung veränderlichen Lichtabschwächung ausbildet. Fig. 5 zeigt eine Tritium-Leuchtzelle 21', deren Lichtaustrittsfläche mit einer Lochblende versehen ist, deren Blendenlöcher rasterförmig so angeordnet sind, dass sich längs der Leuchtzelle 21' eine veränderliche Lichtabschwächung ergibt. Die in Fig. 6 dargestellten übrigen Tritium-Leuchtzellen 18', 19', 20' sind mit entsprechenden Lochblenden versehen. Anstelle einer Lochblende kann auch ein Punktrasteraufdruck auf der Tritiumquelle vorhanden sein.

Bei der Verwendung hat das soweit beschriebene optische Zielgerät folgende Funktion. Bei guten Lichtverhältnissen erblickt der Benutzer beim Anvisieren eines Zieles ein helles Zielbild, in welchem das durch Umgebungslicht über den Lichtsammelstab 8 hell beleuchtete Zentrum 22 der Zielmarke 6 mit gutem Kontrast erkennbar ist. Bei schlechten Lichtverhältnissen oder bei Nacht ist das Zielbild viel weniger hell, und das Zentrum 22 der Zielmarke 6 ist nicht mehr beleuchtet. In diesem Fall werden die Balken 23 der Zielmarke 6 durch die Tritium-Leuchtzellen 18, 19, 20, 21 über die verspiegelte äussere Mantelfläche des kegelförmigen Bereiches 25 (Fig. 2) beleuchtet und zum Zielen verwendet. Dabei passt man die Zielmarkenhelligkeit in einfacher Weise durch Drehen der transparenten Kappe 10 der Helligkeit des Zielobjektes an.

Über das beschriebene Ausführungsbeispiel hinaus liegen noch weitere Ausführungsmöglichkeiten im Rahnen der Erfindung, wie sie in den beiliegenden Patentansprüchen definiert ist. So kann, je nach Ausbildung der zu beleuchtenden Zielmarkenteile durch eine lineare Verschiebung der Kunstlichtzellen 18, 19, 20, 21 in Richtung der Zielachse 16 bei geeigneter Strahlungscharakteristik der Zellen eine radial veränderliche Beleuchtung der Zielmarke 6 erreicht werden. Auch kann durch ein variables Reflexionsvermögen des Spiegels 25 bei einer Relativverschiebung zwischen den Zellen 18, 19, 20, 21 und dem Spiegel eine veränderliche Beleuchtungsstärke erzielt werden. Weiterhin kann der Zielmarkenkopf gem. Fig. 2 auch anders angeordnet sein, z.B. so, dass die Zielmarke von der Beobachtungsseite her schräg über eine teilverspiegelte Frontlinse in den Zielstrahlengang eingespiegelt wird. Bei dieser an sich bekannten Anordnung (z.B. EP-A-69575, Ring Sights Ltd.) vereinigt die teilverspiegelte Frontlinse die Funktionen von Teiler 5 und Optik 15 des hier beschriebenen Ausführungsbeispiels.

## Patentansprüche

1. Optisches Zielgerät mit ersten Mitteln (1) zum Anvisieren eines Zielgebietes, welche einen teildurchlässigen Spiegel (5) umfassen, zweiten Mitteln zur Definition einer Zielmarke (6) mit mindestens einer ersten Lichtquelle (18, 19, 20, 21) für die Beleuchtung der Zielmarke (6), spiegelnden Mitteln (25) zur Umlenkung des Lichtes der ersten Lichtquelle auf die Zielmarke (6) sowie Mitteln (14, 5) zur Überlagerung des von der Zielmarke (6) abgegebenen Lichtes mit dem Zielstrahlengang (16) über den teildurchlässigen Spiegel derart, dass für einen das Zielgebiet anvisierenden Beobachter das Bild der Zielmarke (6) angenähert im Unendlichen erscheint, **dadurch gekennzeichnet**, dass mindestens eines der drei Elemente - erste Lichtquelle (18, 19, 20, 21), Zielmarke (6) und spiegelnde Mittel (25) - gegenüber den beiden anderen Elementen derart verschiebbar oder verdrehbar angeordnet ist, dass sich bei seiner Verschiebung oder Verdrehung die Beleuchtungsstärke der Zielmarke (6) oder von Teilen (23) der Zielmarke ändert.

2. Zielgerät nach Anspruch 1, **dadurch gekennzeichnet**, dass die mindestens eine erste Lichtquelle (18, 19, 20, 21) stromlos ist, dass zur Beleuchtung der Zielmarke (6, 22) mindestens eine weitere Lichtquelle (8) angeordnet ist, welche ein durch Tageslicht anregbares Phosphormaterial enthält, dass ein Teil (22) der Zielmarke (6) durch die Lichtquelle (8) beleuchtet ist, die das durch Tageslicht anregbare Phosphormaterial enthält und dass ein anderer Teil (23) der Zielmarke (6) durch die erste Lichtquelle (18, 19, 20, 21) beleuchtet ist.

3. Zielgerät nach Anspruch 2, **dadurch gekennzeichnet**, dass die Zielmarke (6) eine im Zentrum befindliche Kreisfläche (22) sowie mehrere um das Zentrum radial angeordnete Balken (23) umfasst, dass die spiegelnden Mittel zur Umlenkung des Lichtes der ersten Lichtquelle auf die Zielmarke in Form einer Mantelfläche eines Kegelstumpfes (25) ausgebildet sind, dessen kleinere Öffnung (30) unmittelbar benachbart der Kreisfläche (22) der Zielmarke (6) zur Beleuchtung durch die weitere, durch Tageslicht anregbare Lichtquelle (8) angeordnet ist, wobei die Mantelfläche aussen verspiegelt und auf einem Kreis um den Kegelstumpf (25) herum zu jedem Balken (23) der Zielmarke (6) eine stromlose Lichtquelle (18, 19, 20, 21) im Kreis verschieblich angeordnet ist, derart, dass sich bei einer Verschiebung der stromlosen Lichtquellen (18, 19, 20, 21) die Beleuchtungsstärke der Balken (23) über die spiegelnde Mantelfläche ändert.

4. Zielgerät nach Anspruch 3, **dadurch gekennzeichnet**, dass die das durch Tageslicht anregbare Phosphormaterial enthaltende Lichtquelle einen stabförmigen Körper (8) aus Phosphormaterial umfasst, der derart ausgebildet ist, dass er Umgebungslicht sammelt und gerichtet über seine der Kreisfläche (22) der Zielmarke (6) benachbarte Stirnfläche (11) durch die kleinere Öffnung (30) der Mantelfläche des Kegelstumpfes (25) hindurch abgibt.

5. Zielgerät nach Anspruch 3, **dadurch gekennzeichnet**, dass die stromlosen Lichtquellen (18', 19', 20', 21') an ihren Leuchtflächen Mittel mit längs der Leuchtflächen veränderlicher Lichtabschwächung aufweisen derart, dass bei der Verschiebung der stromlosen Lichtquellen (18', 19', 20', 21') Leuchtflächenteile mit unterschiedlicher Lichtstärke zur Beleuchtung der Zielmarkenteile (23) wirksam werden.

6. Zielgerät nach Anspruch 5, **dadurch gekennzeichnet**, dass die Mittel mit veränderlicher Lichtabschwächung Blenden mit einer rasterförmigen Anordnung von Blendenlöchern oder opaken Bereichen (Fig. 5) sind.

## Claims

1. Optical sighting device with first means (1) for aligning sights on a target area, which means comprise a partially transparent mirror (5), second means for the definition of a sight graticule (6) with at least one first light source (18, 19, 20, 21) for the illumination of the sight graticule (6), reflecting means (25) for the deflection of the first light source onto the sight graticule (6) as well as means (14, 5) for the superposition of the light emitted by the sight graticule (6) with the sighting ray path (16) by way of the partially transparent mirror in such a manner that the image of the sight graticule (6) appears approximately at infinity to an observer aligning the sight on the target area, characterised thereby, that at least one of the three elements - first light source (18, 19, 20, 21), sight graticule (6) and reflecting means (25) - is arranged to be displaceable or rotatable relative to both the other elements in such a manner that the illumination intensity of the sight graticule (6) or of parts (23) of the sight graticule changes on its displacement or rotation.

2. Sighting device according to claim 1, characterised thereby, that the at least one first light source (18, 19, 20, 21) is currentless, at least one further light source (8), which contains a phosphor material excitable by daylight, is arranged for the illumination of the sight graticule (6, 22), that a part (22) of the sight graticule (6) is illuminated by the light source (8), which contains the phosphor material excitable by daylight, and that another part (23) of the sight graticule (6) is illuminated by the first light source (18, 19, 20, 21).

3. Sighting device according to claim 2, characterised thereby, that the sight graticule (6) comprises a circular area (22) disposed in the centre as well as several bars (23) arranged radially of the centre, that the reflecting means for the deflection of the light of the first light source onto the sight graticule are constructed in the shape of an envelope surface of a conical frustrum (25), the smaller opening (30) of which is arranged directly adjacent to the circular area (22) of the sight graticule (6) for illumination by the further light source (8) excitable by daylight, wherein the envelope surface is silvered on the outside and a currentless light source (18, 19, 20, 21) in the circle is arranged to be displaceable on a circle around the conical frustrum (25) relative to each bar (23) of the sight graticule (6) in such a manner that the illumination intensity of the bars (23) changes across the reflecting envelope surface on a displacement of the currentless light sources (18, 19, 20, 21).

4. Sighting device according to claim 3, characterised thereby, that the light source, which contains the phosphor material excitable by daylight, comprises a rod-shaped body (8) of phosphor material, which body is constructed in such a manner that it collects ambient light and emits it through the smaller opening (30) of the envelope surface of the conical frustum (25) directed over its end face (11) adjacent to the circular area (22) of the sight graticule (6).

5. Sighting device according to claim 3, characterised thereby, that the currentless light sources (18', 19', 20', 21') at their luminous surfaces display means with light attenuation which is variable along the luminous surfaces in such a manner that luminous surface portions of different light intensity become effective for the illumination of the sight graticule parts (23) on the displacement of the currentless light sources (18', 19', 20', 21').

6. Sighting device according to claim 5, characterised thereby, that the means with variable light attenuation are apertures with a raster shaped arrangement of aperture holes or opaque regions (Figure 5).

## Revendications

1. Viseurs avec des premiers moyens (1) pour viser un domaine, qui comportent un miroir semi-argenté (5), des seconds moyens pour la définition d'un repère de visée (6) avec au moins une première source de lumière (18, 19, 20, 21) pour l'éclairement du repère de visée (6), des moyens de réflexion (25) pour la déviation de la lumière de la première source de lumière vers les repères de visée (6) ainsi que des moyens (14, 5) pour la superposition de la lumière émise par les repères de visée (6) avec le trajet des rayons de visée (16) sur le miroir semi-argenté de manière que, pour un observateur visant le domaine, l'image du repère de visée (6) semble presqu'à l'infini, caractérisé en ce qu'au moins l'un des trois éléments, première source de lumière (18, 19, 20, 21), repère de visée (6) et moyen de réflexion (25), est agencé mobile vis-à-vis des deux autres éléments ou rotatif de manière que lors de son déplacement ou de sa rotation, la force d'éclairement du repère de visée ou de parties (23) du repère de visée change.

2. Viseur selon la revendication 1, caractérisé en ce que la au moins une première source de lumière (18, 19, 20, 21) est sans courant, en ce que pour l'éclairement du repère de visée (6, 22) au moins une autre source de lumière (8) est agencée, qui contient un matériau de phosphore pouvant être excité par la lumière du jour, en ce qu'une partie (22) du repère de visée (6) est éclairée par la source de lumière (8), qui contient le matériau de phosphore pouvant être excité par la lumière du jour et en ce qu'une autre partie (23) du repère de visée (6) est éclairée par la première source de lumière (18, 19, 20, 21).

3. Viseur selon la revendication 2, caractérisé en ce que le repère de visée (6) comporte une surface circulaire (22) qui se trouve au centre ainsi que plusieurs barres (23) agencées radialement autour du centre, en ce que les moyens de réflexion pour la déviation de la lumière de la première source de lumière sur le repère de visée ont la forme d'une surface d'enveloppe d'un tronc de cône (25), dont la petite ouverture (30) est agencée directement voisine de la surface circulaire (22) du repère de visée(6) pour l'éclairement à travers l'autre source de lumière (8) pouvant être excitée par la lumière du jour, ainsi la surface d'enveloppe reproduit vers l'extérieur et, sur un cercle autour du tronc de cône (25) jusqu'à chaque barre (23) du repère de visée (6), est agencée une source de lumière sans courant (18, 19, 20, 21) mobile en cercle de manière que lors d'un déplacement des sources de lumière sans courant (18, 19, 20, 21), la source d'éclairement des barres (23) change sur les surfaces d'enveloppe de réflexion.

4. Viseur selon la revendication 3, caractérisé en ce que la source de lumière contenant le matériau de phosphore pouvant être excité par la lumière du jour comporte un corps (8) en matériau de phosphore en forme de bâton qui est configuré de manière à rassembler la lumière de l'environnement et à la diriger par sa surface frontale voisine de la surface circulaire (22) du repère de visée (6) à travers la plus petite ouverture (30) de la surface d'enveloppe du tronc de cône (25).

5. Viseur selon la revendication 3, caractérisé en ce que les sources de lumière sans courant (18', 19', 20', 21') présentent sur leurs surfaces d'éclairement, des moyens avec atténuation de la lumière variable le long de la surface d'éclairement de manière que lors du déplacement des sources de lumière sans courant (18', 19', 20', 21'), des parties de surface d'éclairement soient rendues efficaces par des forces différentes d'éclairement pour l'éclairement des parties (23) du repère de visée.

6. Viseur selon la revendication 5, caractérisé en ce que les moyens avec atténuation variable de la lumière sont des obturateurs avec un agencement en forme de grille de trous ou de zones opaques (figure 5).

# Fig. 1

EP 0 254 675 B1

# Fig. 2

A

28
10
18
13
24
8
12
11
30
25
20
26

A

# A-A Fig. 4

# A-A Fig. 3

28  25  24

31  18  6

19  21

22  20  23

27  26

31  29

# Fig. 6

B – B

# Fig. 5

EP 0 254 675 B1